Europäisches Patentamt

European Patent Office

Office européen des brevets

(11) Publication number: **0 143 723**
**A2**

(12) # EUROPEAN PATENT APPLICATION

(21) Application number: **84402450.5**

(22) Date of filing: **30.11.84**

(51) Int. Cl.⁴: **G 06 F 11/00**

(30) Priority: **30.11.83 JP 226334/83**

(43) Date of publication of application: **05.06.85**
**Bulletin 85/23**

(84) Designated Contracting States: **DE FR GB**

(71) Applicant: **FUJITSU LIMITED, 1015, Kamikodanaka Nakahara-ku, Kawasaki-shi Kanagawa 211 (JP)**

(72) Inventor: **Tanaka, Tsutomu, 2-60, Hie-cho, Minami-ku, Yokohama-shi Kanagawa 232 (JP)**
Inventor: **Nishida, Hodehiko, 3-9-14, Oyamadai, Setagaya-ku, Tokyo 158 (JP)**

(74) Representative: **Descourtieux, Philippe et al, CABINET BEAU de LOMENIE 55 rue d'Amsterdam, F-75008 Paris (FR)**

(54) Main storage failure address control system in a data processing system.

(57) Disclosed is a main storage failure address control system in a data processing system which comprises a plurality of main storage units (MSU) including a hardware prefix area, a main storage control unit (MCU), a plurality of data processing units (CPU), and at least one data transfer apparatus, in which when a failure occurs at the read or write operation in the main storage unit, the failed main storage address is held in a failed main storage address register FSAR (41), and the address is then stored in the hardware prefix area; wherein the failed main storage address register FSAR (41) is located in the main storage control unit. In this system, the circuit constitution for reading the failed main storage address during access to the main storage unit and for storing the address into the hardware prefix area is simplified. Thus, increasing the efficiency of the processing of the system.

## MAIN STORAGE FAILURE ADDRESS CONTROL SYSTEM
## IN A DATA PROCESSING SYSTEM

BACKGROUND OF THE INVENTION

1.   Field of the Invention

The present invention relates to a failure control system for main storage units (MSU) in a data processing system, more particularly, to a main storage failure address control system, wherein a memory control unit (MCU) holds the address of a failed portion of the main storage unit and writes it into a prefix area of the main storage unit hardware through a command from a central processing unit (CPU) in the data processing system.

2.   Description of the Related Art

In general, a large scale data processing system comprises a plurality of CPU's as data processing units, data transfer apparatuses, i.e., channel processors (CHP), an MCU, and a plurality of MSU's. The CPU's and the CHP's are connected to the MSU's through a central MCU.

When a CPU or CHP accesses an address of the MSU, if an error is detected in the accessed data, the address is fetched as a failed main storage address (FSA), temporarily stored in a failed main storage address register (FSAR) in the CPU, and stored in the hardware prefix area of the MSU as data for failure control. Hardware prefix areas corresponding to each CPU are provided to control the hardware of the system. The scale of the hardware prefix area is usually 4 k bytes, and is used for storing, e.g., program status words, channel status words, channel address words, interrupt codes, and the like.

SUMMARY OF THE INVENTION

An object of the present invention is to provide a main storage failure address  control system in a data

- 2 - 0143723

processing system wherein the circuit constitution for fetching a failed main storage address and for storing the address into the hardware prefix area of a main storage unit is simplified, and the efficiency of the processing is increased, when the main storage unit is accessed. To accomplish this object, a failed main storage address register (FSAR) is provided in the MCU; since the accessed addresses from the CPU's and the data transfer apparatuses always pass through an MCU.

According to a feature of the present invention there is provided a main storage failure address control system in a data processing system comprising, a plurality of main storage units each including a hardware prefix area, a main storage control unit, a plurality of data processing units, at least one data transfer apparatus, and at least one failed main storage address register in the main storage control unit. Thus, when one of the main storage units fails at a read or write operation, the failed main storage address accessed from the data processing units or the data transfer apparatus is held in the failed main storage address register, and the failed main storage address is then stored in the hardware prefix area through a command from the data processing unit.

BRIEF DESCRIPTION OF THE DRAWINGS

Figure 1 is a block diagram of the constitution of a general data processing system;

Fig. 2 is a block circuit diagram of an MCU and a CPU in a conventional main storage failure address control system; and

Fig. 3 is a block circuit diagram of an MCU and a CPU in a main storage failure address control system in a data processing system according to an embodiment of the present invention.

DESCRIPTION OF THE PREFERRED EMBODIMENTS

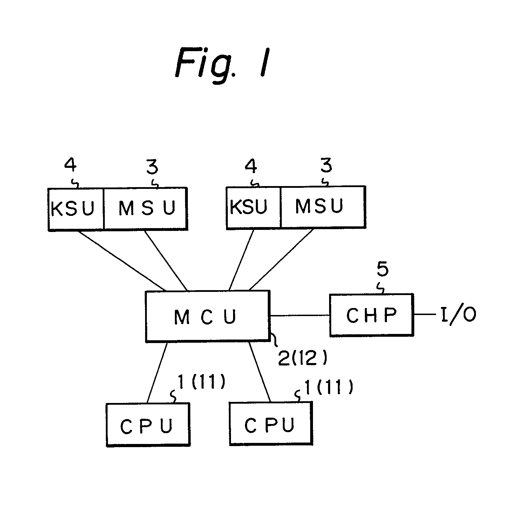

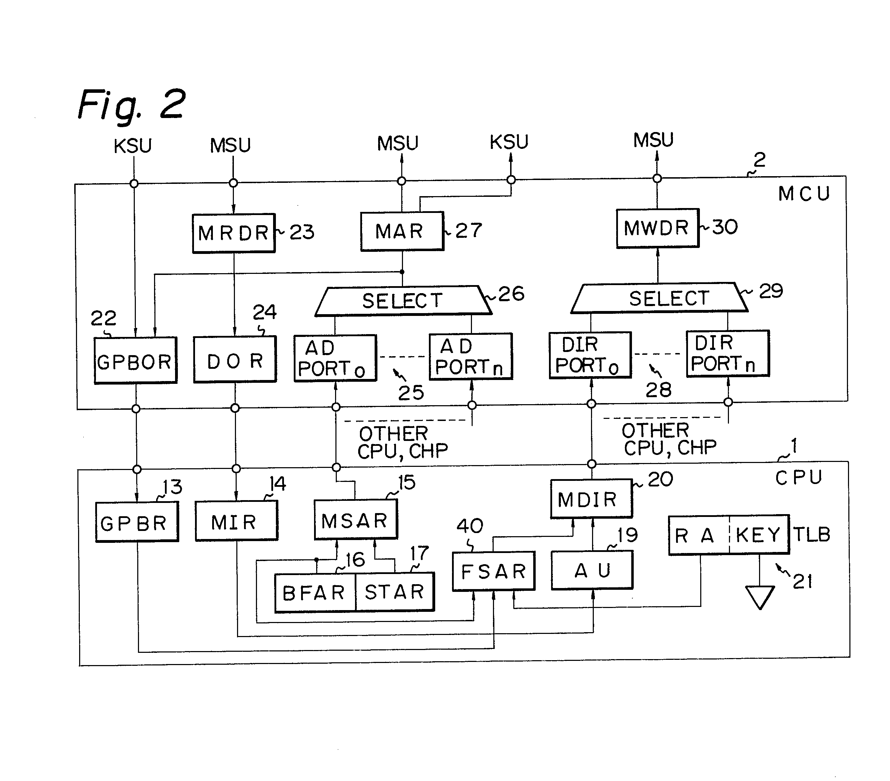

Prior to the description of an embodiment of the present invention, the background of the art is explained with reference to Fig. 1, and a conventional system is explained with reference to Fig. 2 as a comparison with the present invention.

Figure 1 is a schematic block diagram of a general large scale data processing system. This system comprises a plurality of CPU's 1, an MCU 2, a plurality of MSU's 3, key storage units (KSU's) 4 arranged in the MSU 3, and a CHP 5. The MCU 2 is arranged at the center point between the afore-mentioned units, and the MSU's 3 are connected to the CPU's 1 and CHP 5 through the MCU 2.

Figure 2 is a block circuit diagram of the MCU 2 and the CPU 1 depicting a conventional main storage failure address control system.

The reference numerals and reference characters used for the blocks in Fig. 2 are as follows.

    1:  CUP (central processing unit)
    2:  MCU (memory control unit)
    13: GPBR (general-purpose bus register)
    14: MIR (move-in register)
    15: MSAR (main storage address register)
    16: BFAR (block fetch address register)
    17: STAR (store address register)
    19: AU (arithmetic unit)
    20: MDIR (MCU data in register)
    21: TLB (translation lookaside buffer)
    22: GPBOR (general-purpose bus out register)
    23: MRDR (memory read data register)
    24: DOR (data out register)
    25: AD $PORT_0 \sim PORT_n$ (address ports $0 \sim n$)
    26: SELECT (selector)
    27: MAR (memory address register)
    28: DIR $PORT_0 \sim PORT_n$ (data in register ports $0 \sim n$)
    29: SELECT (selector)
    30: MWDR (memory write data register)
    40: FSAR (failed main storage address register)

- 4 - 0143723

In the MCU 2, the SELECT 26 selects one of the accessed addresses from the CPU's 1 and the CHP 5 through the AD $PORT_{0 \sim n}$ 25 and transfers it to the MSU 3 and the KSU 4 through the MAR 27.

The SELECT 29 selects write data from the CPU's 1 and the CHP 5 through the DIR $PORT_{0 \sim n}$ 28 and transfers it to the MSU 3 through the MWDR 30. A protection key read from the KSU 4 and the output of the SELECT 26 are selected by the GPBOR 22 and transferred to the CPU 1.

Data read from the MSU 3 is transferred to the CPU 1 through the MRDR 23 and the DOR 24.

In the conventional system shown in Fig. 2, the FSAR 40 is arranged in each CPU 1. When a failure occurs during accessing from the CPU 1, a block fetch address (BFA) is read from the BFAR 16 by an error report (not shown) from the MCU 2, and the BFA is set in the FSAR 40 in the relevant CPU 1 as an FSA. When a failure occurs during accessing of a write operation and during accessing from the CHP 5, the FSA is set in the FSAR 40 through the SELECT 26, the GPBOR 22, and the GPBR 13, with an error report from the MCU 2. In addition, when an error occurs in a main storage key (MS-KEY) read from the TLB 21, an absolute address (RA) simultaneously read from the TLB 21 is set in the FSAR 40 and is held as an FSA. The storage of each above-mentioned FSA to the hardware prefix area in the MSU is carried out by sending the contents of the FSAR 40 to the MCU 2 through the MDIR 20 through a request for storing from the CPU 1.

As mentioned above, in the conventional system, since the FSAR 40 is provided in the CPU 1, buses and gates are necessary for collecting the FSA in each case to the FSAR 40 in the CPU 1 and for transferring the FSA to the MCU 2 and the MSU 3, and these buses and gates must be provided for each CPU 1. Further, since a common bus (the output circuit of the GPBOR 22) is used for transferring the FSA from the MCU 2 to the CPU 1, the FSA occurring during the accessing from the CHP 5 cannot always be set in the FSAR 40, through interference caused by other signals.

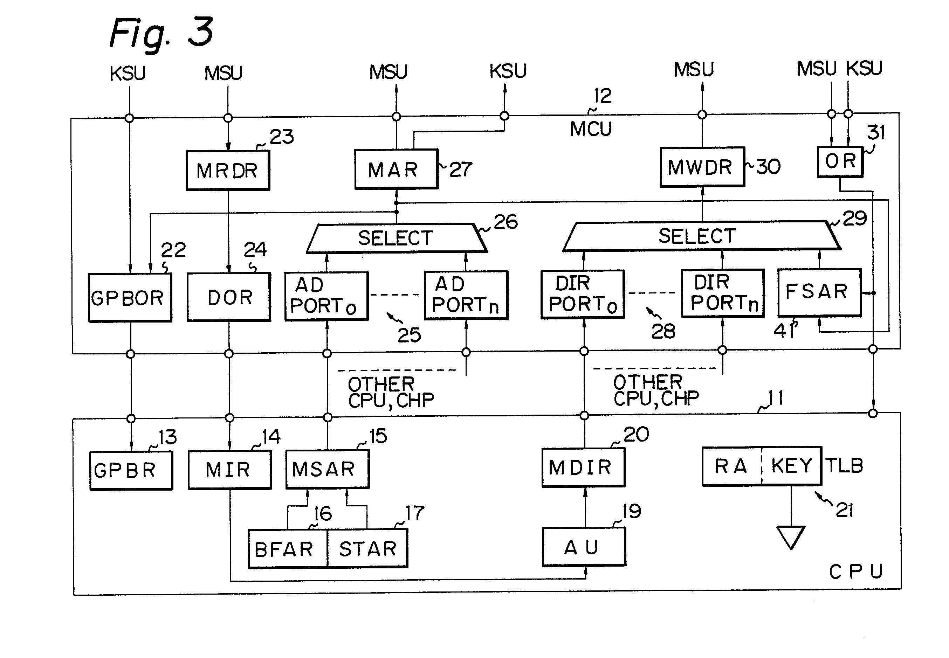

The details of an embodiment of the present invention will be now explained with reference to Fig. 3.

Figure 3 is a block circuit diagram of the MCU and the CPU according to the embodiment of the present invention. The circuit in Fig. 3 is an improvement over the conventional circuit shown in Fig. 2. In the figures, elements having identical functions are given the same reference numerals and the same reference characters, except that the CPU 1 is referred to as CPU 11 and the MCU 2 as MCU 12.

In this embodiment, a failed main storage address register (FSAR) 41 is used instead of the FSAR 40 in Fig. 2. The FSAR 41 is located in the CPU 1. Although there are changes in the connections of the relevant portions, due to the different position of the FSAR, the remaining portions of this circuit are the same as those of Fig. 2. Each constituent element in this embodiment is arranged as shown in Fig. 1, and the changed elements are those marked by the reference numerals in parentheses in Fig. 1.

In this embodiment, as mentioned above, the FSAR 41 is located in the MCU 12, as an input to the SELECT 29. The output of the SELECT 26 is input to the FSAR 41. The output of the SELECT 26 is the selected one of the accessed addresses supplied from the CPU's 11 and the CHP 5 through the AD PORT$_{0 \sim n}$ 25. When the MCU 12 detects an error at the MSU 3 or the KSU 4, through an OR gate 31, the address is set in the FSAR 41. The FSAR in the CPU 11 is removed and the relevant buses and gates become unnecessary, thus simplifying the circuit.

The input of the FSAR 41 is supplied and the accessed address signal is transferred to the MSU 3 and KSU 4 by branching, therefore, when the FSA is collected, the FSAR 41 carries out a write operation only at the time of an error detection.  Particular buses or gates are not needed to transfer the FSA, since, at this time, it is necessary only to report the error occurrence from the MCU 12 to the CPU 11; i.e., the transference of the FSA becomes unnecessary.  This report causes the CPU 11 to send a store command to the MCU 12.  The MCU 12 controls the SELECT 29 to select the output of the FSAR 41 as an input.  Simultaneously, the address, appointed by the store command, in the hardware prefix area of the MSU 3 is transferred to the MSU 3, and the contents of the FSAR 41 are then stored in the MSU 3 at the appointed address.

In the described embodiment, although only one FSAR 41 is located in the MCU 12, a plurality of FSAR's may be located therein.

Thus, according to the above-described embodiment, since the failed main storage address register FSAR is located in the MCU 12, the number of relevant buses and gates connected to the CPU is reduced and the constitution of the system simplified.  If a plurality of CPU's are provided, a greater effect is achieved. Further, since the reception and transmission of FSA between the CPU's 11 and the MCU 12 using common buses is not necessary, the FSA can be set without fail in the FSAR when the CHP 5 accesses the MSU 3.

## CLAIMS

A main storage failure address control system in a data processing system comprising, a plurality of main storage units each including a hardware prefix area, a main storage control unit, a plurality of data processing units, at least one data transfer apparatus, and at least one failed main storage address register in the main storage control unit, wherein when one of the main storage units fails at read or write operation, the failed main storage address being accessed from the data processing units or the data transfer apparatus is held in the failed main storage address register, and the failed main storage address is then stored into the hardware prefix area by a command from the data processing unit.

## Fig. I

Fig. 2

# Fig. 3